(19) **Europäisches Patentamt**

**European Patent Office**

**Office européen des brevets**

(11) **EP 0 794 153 B1**

(12) **FASCICULE DE BREVET EUROPEEN**

(45) Date de publication et mention
de la délivrance du brevet:
**19.07.2000 Bulletin 2000/29**

(51) Int Cl.⁷: $C01F\ 7/00$, $C02F\ 1/52$

(21) Numéro de dépôt: **97400428.5**

(22) Date de dépôt: **26.02.1997**

(54) **Procédé de préparation de polychlorosulfates basiques d'aluminium et leur applications**

Verfahren zur Herstellung von basischen Polychlorosulfaten von Aluminium und deren Verwendung

Process for the preparation of basic aluminium polychlorosulphates and its use

(84) Etats contractants désignés:
**AT BE CH DE DK ES FI FR GB GR IE IT LI LU NL PT SE**

(30) Priorité: **08.03.1996 FR 9602947**

(43) Date de publication de la demande:
**10.09.1997 Bulletin 1997/37**

(73) Titulaire: **ELF ATOCHEM S.A.**
**92800 Puteaux, Hauts-de-Seine (FR)**

(72) Inventeur: **Dufour, Pascal**
**69300 Caluire (FR)**

(56) Documents cités:
**EP-A- 0 557 153**

- **PATENT ABSTRACTS OF JAPAN vol. 002, no. 015 (C-002), 31 Janvier 1978 & JP 52 113384 A (TOYO SODA MFG CO LTD), 22 Septembre 1977,**
- **PATENT ABSTRACTS OF JAPAN vol. 002, no. 046 (C-009), 28 Mars 1978 & JP 53 001699 A (TOYO SODA MFG CO LTD), 9 Janvier 1978,**

**Description**

La présente invention a pour objet un procédé de préparation d'aluminium de haute basicité ainsi que l'application de ces polychlorosulfates d'aluminium au traitement des eaux potables, des effluents aqueux et dans l'industrie papetière.

Les polychlorosulfates d'aluminium ont pour formule générale :

$$Al(OH)_a Cl_b Y_c \, /dM'Cl_2/ \, eM''Cl \qquad (I)$$

dans laquelle Y représente un anion de valence 2, tel que $SO_4{}^{2-}$, M' représente un cation de valence 2, tel qu'un métal alcalino-terreux,

M'' représente un cation de valence 1, tel qu'un métal alcalin ou l'ammomium,

a, b, c et d sont des nombres entiers positifs ou fractionnaires positifs non nuls,

e peut être nul ou un nombre entier positif ou fractionnaire positif,

b = 3-2c-a et 2d+e+b $\leq$ 3.

La basicité $\beta$ est définie par le rapport a/3 exprimé en %, et elle peut varier de 20 à 75 %. A partir d'une composition chimique, elle peut se calculer par la formule suivante :

$$\beta = 100(3Al + 2\,M' + M'' - 2Y - Cl)/3\,Al$$

dans laquelle Al, M', M'', Y et Cl sont exprimés en moles.

Les polychorosulfates d'aluminium désignés ci-après par PCSA sont largement utilisés dans l'industrie, notamment papetière et pour le traitement des eaux résiduelles et surtout potables, où leur qualité de coagulation et de floculation élevée en font un produit de choix.

Plus précisément, pour le traitement des eaux, il est recherché des procédés qui évitent toute formation d'effluent, notamment de gypse ($Ca\,SO_4$, $2H_2O$) et qui permettent de fabriquer des produits ayant des aptitudes à la floculation-coagulation des matières en suspension dans l'eau potable, des aptitudes à ne relarguer que très peu d'aluminium soluble dans l'eau potable traitée et une stabilité au stockage des solutions de PCSA pendant plusieurs mois, c'est à dire incluant des variations de température entre 0° C et 40° C, voire davantage si le stockage n'est pas protégé des rayons du soleil.

Le brevet EP 327 419 décrit un procédé de fabrication de PCSA haute basicité qui répond aux aptitudes et à la stabilité telles que précédemment mentionnées. Cependant, ce procédé génère un effluent gypse dont le rejet dans l'eau de rivière pose des problèmes d'environnement et dont la mise en décharge entraîne des coûts supplémentaires.

L'efficacité de la floculation-coagulation s'évalue par une mesure de la turbidité de la phase d'eau surnageante après traitement avec un PCSA. Les gros flocs ayant des propriétés de décantation rapide sédimentent alors que les flocs les plus petits sont entraînables sur un filtre à sable et doivent avoir une excellente aptitude à s'absorber dans un filtre à sable. L'efficacité de la filtration sur un filtre à sable en profondeur se caractérise par le nombre de particules par $cm^3$ que l'on retrouve dans les eaux clarifiées.

L'aptitude à ne relarguer qu'une très faible teneur résiduelle en d'aluminium dans l'eau potable s'évalue en filtrant l'eau traitée à 0,45 $\mu$m et en dosant l'aluminium présent.

Un PCSA en solution est dit stable s'il garde ses propriétés applicatives après un stockage de 3 mois à température ambiante et de 1 mois à 40°C et s'il ne dépose aucun solide, à 40°C durant un mois ou à température ambiante (25°C) durant trois mois.

Dans les applications courantes des PCSA, se posaient plusieurs problèmes, résultant notamment de leurs procédés de fabrication.

L'élimination de la turbidité, liée directement à la floculation-coagulation, nécessite une teneur en sulfate élevée et une température de l'étape de basification faible inférieure à 70°C, préférentiellement inférieure à 40°C. Lorsque la teneur en sulfate est élevée, les PCSA présentent une résistance à la température élevée.

Sans nuire à l'élimination de la turbidité, il devient alors possible de réaliser des synthèses à plus de 70°C, par exemple entre 80° C et 90°C pour un rapport des pourcentages massiques sulfate/alumine supérieur à 3/10,5.

Le traitement des eaux potables nécessite d'obtenir une teneur résiduelle en aluminium faible sur eaux traitées, ce qui implique une basicité élevée des PCSA comprise entre 60 % et 75%. La teneur résiduelle en aluminium sur eaux traitées diminue lorsque qu'il est utilisé des PCSA synthétisés avec des températures élevées lors de l'étape de basification, typiquement supérieure à 70°C de préférence entre 80° C et 85°C. Lorsque le rapport des pourcentages massiques sulfate/alumine augmente de 0,1/10 à 3/10, la teneur résiduelle en aluminium augmente rapidement pour se stabiliser au rapport 3/10 jusqu'à 23,8/8,5. Les teneurs résiduelles en aluminium sont trop élevées pour un rapport des pourcentages massiques sulfate/alumine supérieur à 0,1/10.

Pour obtenir des PCSA efficaces en aluminium résiduel, il est nécessaire d'avoir des PCSA de forte basicité, une température de l'étape de basification élevée avec une teneur en sulfate des PCSA très faible. Température élevée et teneur en sulfate faible sont des conditions opposées à l'obtention des PCSA efficaces en élimination de la turbidité.

Les PCSA en solution doivent être stables au stockage et en température jusqu'à 40°C. La stabilité en température des PCSA en solution augmente avec le rapport massique sulfate/alumine. Les PCSA en solution sont souvent très stables pour des rapports des pourcentages massiques sulfate/alumine supérieurs à 3/10.

Dans le brevet japonais JP-53 001699/1978 on décrit un procédé de fabrication de polychlorosulfate d'aluminium. Ce procédé consiste dans une première étape à basifier un polychlorosulfate contenant beaucoup de sulfate par une quantité équimoléculaire de $CaCO_3$ conduisant à la production de gypse ($CaSO_4$, $2H_2O$) qui est séparé. Dans une seconde étape, on fait réagir le produit de l'étape précédente dont la basicité est comprise entre 55 % et 58% avec un composé choisi dans le groupe consistant en $CaCO_3$, $NaHCO_3$, $Na_2CO_3$, $Mg(OH)_2$ et MgO, sans dépasser la température de 60°C. Bien que la basicité soit comprise entre 65-70%, les teneurs résiduelles en aluminium dans les eaux traitées sont supérieures de 30 % à 60 % à celles obtenues avec les PCSA obtenus selon le procédé décrit dans le brevet EP 327 419 précédemment mentionné. Une température de 60°C est insuffisante et une température supérieure à 70°C dégrade les propriétés de floculation-coagulation. L'inconvénient majeur de ce procédé reste une sous-production importante de gypse dont le rejet pose des problèmes d'environnement, comme il a déjà été mentionné ci-avant.

Dans le brevet JP 52 113384/1977, on décrit un procédé de fabrication de polychlorosulfate d'aluminium basique à 65-70% par addition d'un agent alcalin tel que $CaCO_3$, $NaHCO_3$, $Mg(OH)_2$ et/ou MgO à une solution de chlorure d'aluminium ou de chlorure d'aluminium basique, toujours à une température inférieure à 60°C. On constate que les teneurs résiduelles en aluminium sont encore trop élevées par rapport aux PCSA obtenus selon le procédé décrit dans le brevet EP 327 419, pour les mêmes raisons que celles expliquées pour le brevet JP-53 001699/1978, ci dessus. Il est sous-produit du gypse en quantité importante qui reste un inconvénient.

Dans la demande de brevet canadien CA 2 109 756 A1, on décrit la fabrication d'un floculant, sans génération de gypse, en procédant à l'ajout de gypse dans une solution de chlorosulfate d'aluminium à une température comprise entre 45° C et 98°C, préférentiellement 75°C. Le gypse ainsi ajouté est totalement dissout, la concentration en calcium reste limitée dans une plage de 0,1 % à 0,4 % en $Ca^{2+}$. Il est clairement précisé que l'étape de basification avec une base tel que par exemple $CaCO_3$ doit être réalisée à 45°C. La basicité du produit, telle qu'obtenue selon ce brevet est inférieure à 55 %. Le rapport des pourcentages massiques sulfate/alumine est voisin de 3/10. La reproduction des exemples n'a cependant pas permis de retrouver les basicités de 55 % annoncées mais ont conduit à des basicités plus faibles, comprises entre 10 % et 15 %. Les teneurs résiduelles en aluminium sont excessives par rapport aux PCSA obtenus selon le procédé décrit dans le brevet EP 327 419.

En vue d'améliorer la quantité résiduelle d'aluminium restante dans une eau traitée, le brevet EP 327 419 mentionné précédemment propose un procédé de préparation de PCSA de basicité élevée, comprise entre 60 % et 70 %. Ce procédé consiste notamment à mettre en contact une solution d'aluminium, de chlorure, d'excès de sulfate , au contact d'un composé alcalino-terreux basique, à descendre de 93°C à 65°C, puis à éliminer le sulfate alcalino-terreux insoluble par filtration. Il y a lieu de noter que la synthèse est démarrée en large excès de sulfate, et que de façon concomitante à la baisse de température, la teneur en sulfate dans le milieu réactionnel diminue. Il est ainsi évité la dégradation thermique des solutions de PCSA qui sont sensibles à faible taux de sulfate, typiquement pour ce produit $SO_4^{2-}$ = 1,9% / $Al_2O_3$= 10,5%. Les PCSA de haute basicité ainsi obtenus permettent d'obtenir sur l'eau traitée des teneurs résiduelles en aluminium plus faibles comme nous l'avons déjà mentionné précédemment. Cependant, ce procédé présente l'inconvénient majeur de générer des quantités importantes de gypse (environ 300 kg par tonne de PCSA produit).

Dans le brevet EP 557 153, on décrit également un procédé de préparation de PCSA de haute basicité qui entraîne peu d'effluents. Cependant, ce procédé présente le grave inconvénient d'être peu reproductible. Ce manque de reproductibilité se manifeste notamment par l'obtention d'un taux élevé d'aluminium résiduel dans l'eau traité 8 fois sur 10. Ce taux d'aluminium résiduel peut atteindre une quantité qui est de 40 % supérieure à celle obtenue avec les PCSA décrits dans le brevet EP 327 419.

Rappelons que pour obtenir des PCSA efficaces en aluminium résiduel, il est nécessaire d'avoir un PCSA de forte basicité, fabriqué à une température de basification élevée avec une teneur en sulfate des PCSA très faible. Une température élevée et une teneur en sulfate faible sont des conditions opposées à l'obtention de PCSA efficaces en élimination de la turbidité.

Ceci a été constaté notamment dans le brevet FR 2 317 227 et le brevet européen EP 0 557 153 dans lesquels il est impossible de surbasifier un chlorosulfate d'aluminium basique de 40% vers 55-70%, par une base, à une température supérieure à 70°C, sans éviter la dégradation des propriétés floculantes des produits. Le domaine de température mentionné dans les deux brevets ci-dessus est 40° C à 70°C pour le premier et de 50° C à 70°C pour le second. Les produits décrits dans le brevet FR 2 317 227 ont des basicités comprises entre 40 % et 55% contre 65 % à 75 % pour le brevet EP 0 557 153 A1. Le rapport des pourcentages massiques $SO_4^{2-}/Al_2O_3$ est inférieur à 3/10,5.

Selon le brevet EP 327 419, il est possible de travailler à plus de 70°C en démarrant la synthèse avec un excès de sulfate que l'on précipite en gypse. Il est également possible de travailler au dessus de 70°C si l'on vise un produit final contenant plus de 3 % de $SO_4^{2-}$ pour 10,5 % d'$Al_2O_3$.

Le problème à résoudre est donc d'obtenir des PCSA stables ayant de bonnes propriétés floculantes avec une aptitude à conférer à l'eau traité peu d'aluminium résiduel tout cela en s'efforçant de fabriquer des PCSA selon un procédé produisant le moins d'effluents possibles. De plus, il est souhaité par les utilisateurs de PCSA que les flocs les plus petits aient de bonnes propriétés d'absorption sur les filtres à sable.

On a maintenant trouvé un procédé de préparation de polychlorosulfate d'aluminium à haute basicité présentant la formule générale :

$$Al(OH)_a Cl_b Y_c \ / \ dM'Cl_2 / eM''Cl \qquad\qquad (I)$$

dans laquelle

Y représente un anion de valence 2, tel que $SO_4^{2-}$,
M' représente un cation de valence 2, tel qu'un métal alcalino-terreux,
M'' représente un cation de valence 1, tel qu'un métal alcalin ou l'ammonium,
a, b, c et d sont des nombres entiers positifs ou fractionnaires positifs non nuls et
e peut être nul ou un nombre entier positif ou fractionnaire positif tels que
$1,8 < a < 2,25$
$0,001 < c < 0,150$
$b = 3 - 2c - a$ et $2d + e + b \leq 3$,

et ayant une basicité $\beta$ comprise entre 60 % et 75 %, et, de préférence comprise entre 65 % et 70 %, cette basicité étant définie par la formule

$$\beta = 100 \ x \ (3Al + 2M' + M'' - 2Y - Cl) \ /3Al$$

dans laquelle Al, M', M'', Y et Cl sont exprimés en mole, ledit procédé consistant à mettre en contact un composé basique d'un métal alcalin, de préférence en solution aqueuse et au moins un composé basique d'un métal alcalino-terreux ou un halogénure d'un métal alcalino-terreux, en suspension aqueuse ou en poudre, en présence d'ions sulfate avec une solution de chlorure d'aluminium basique de formule :

$$Al(OH)_x Cl_y \qquad\qquad (II)$$

dans laquelle x est un nombre compris entre 0,1 et 1,5 et y = 3-x, à une température comprise entre la température ambiante (environ 25° C) et 70° C, ledit procédé étant caractérisé en ce que l'on réalise après la basification une cuisson du milieu réactionnel obtenu, à une température, dite température de cuisson, comprise entre 60° C et 95° C, d'une façon telle que la durée de cuisson est comprise entre 3 h et 20 h et, de préférence comprise entre 5 h et 9 h pour une température de cuisson de 60° C et que la durée de cuisson est comprise entre 5 minutes et 15 minutes et, de préférence entre 7 minutes et 10 minutes pour une température de cuisson de 95° C.

Selon la présente invention des durées de cuisson pour les températures de cuisson de 70° C, 80° C, 85° C et 90° C sont rassemblées dans le tableau ci après.

EP 0 794 153 B1

| TEMPERATURE (°C) | DUREE DE CUISSON | | |
|---|---|---|---|
| | MINIMUM | OPTIMUM | MAXIMUM |
| 60 | 3h | 5h à 9h | 20h |
| 70 | 1h | 1h à 4h | 5h |
| 80 | 10 min | 30 min à 1h30 min | 1h45 min |
| 85 | 10 min | 30 min à 1 h | 1h15 min |
| 90 | 5 min | 15 min à 30 min | 45 min |
| 95 | 5 min | 7 min à 10 min | 15 min |

Pour toutes températures de cuisson intermédiaires, l'homme du métier procédera par extrapolation.

Selon la présente invention, le rapport des pourcentages massiques sulfate/alumine est avantageusement inférieur à 3/10,5 et, de préférence, compris entre 1/10,5 et 1,5/10,5.

Selon la présente invention, la mise en contact des réactifs est effectuée de préférence sous forte agitation et/ou sous forte turbulence.

Ainsi, tout moyen permettant d'obtenir une turbulence élevée tel que injection par buse ou par venturi peut être utilisé.

La cuisson est avantageusement réalisée sous agitation qui, de préférence est moins forte que celle pratiquée lors de la mise en contact des réactifs.

Selon la présente invention, les termes "composé basique d'un métal alcalin" désignent tout dérivé à caractère basique dudit métal alcalin, en particulier oxyde, hydroxyde, carbonate, bicarbonate. A titre d'illustration de composés basiques d'un métal alcalin utilisables selon la présente invention, on citera NaOH, KOH, NaHCO$_3$, Na$_2$CO$_3$, K$_2$CO$_3$, KHCO$_3$ et les milanges d'au moins deux des composés basiques d'un métal alcalin énumérés ci-avant. De préférence, on utilisera NaOH ou Na$_2$CO$_3$.

Ces composés sont de préférence utilisés sous forme de solution aqueuse. La concentration molaire en composé basique du métal alcalin est au moins égale à 2 moles/l et, de préférence comprise entre 4 moles/l et 7 moles/l.

Selon la présente invention, les termes "composé basique d'un métal alcalino-terreux" désignent tout dérivé à caractère basique dudit métal alcalino-terreux, en particulier oxyde, hydroxyde, carbonate, bicarbonate.

A titre d'illustration de composés basiques d'un métal alcalino-terreux utilisables selon la présente invention, on citera CaO, MgO, Ca(OH)$_2$, Mg(OH)$_2$, CaCO$_3$ et les mélanges d'au moins deux des composés basiques d'un métal alcalino-terreux énumérés ci-avant. De préférence, on utilisera Ca(OH)$_2$, Mg(OH)$_2$ ou MgO.

A titre d'illustration d'halogénure d'un métal alcalino-terreux utilisable selon la présente invention on citera CaCl$_2$, MgCl$_2$. De préférence, on utilisera CaCl$_2$.

Selon la présente invention, les ions sulfates peuvent être apportés par l'intermédiaire de composés tels que H$_2$SO$_4$, Na$_2$SO$_4$, CaSO$_4$, CaSO$_4$, 2H$_2$O MgSO$_4$. De préférence, on utilisera H$_2$SO$_4$, Na$_2$SO$_4$ et CaSO$_4$, 2H$_2$O (gypse).

Selon la présente invention, l'ordre d'introduction des réactifs peut être effectué de différentes façons et il a été mis en évidence que l'ordre d'introduction des réactifs n'avait aucune conséquence sur la qualité des PCSA obtenus selon la présente invention.

Ainsi, notamment, on peut mettre en contact la solution de chlorure basique d'aluminium (II), simultanément avec le composé basique d'un métal alcalin et le sulfate puis on introduit au milieu réactionnel ainsi obtenu le composé basique d'un métal alcalino-terreux (en suspension ou sous forme de poudre), où inversement, le composé basique d'un métal alcalino-terreux puis introduire simultanément le composé basique d'un métal alcalin et le sulfate.

Selon une autre variante, on peut mettre en contact la solution de chlorure basique d'aluminium (II) et CaCl$_2$ puis on introduit au milieu réactionnel ainsi obtenu simultanément le composé basique d'un métal alcalin et le sulfate.

Les procédés antérieurs permettaient d'améliorer une ou plusieurs caractéristiques au détriment d'une ou plusieurs autres caractéristiques.

Selon la présente invention, les PCSA sont obtenus selon un procédé perfectionné désigné comme "propre" c'est-à-dire un procédé produisant quasiment pas de sous-produits tels que le gypse. En outre, le procédé selon la présente invention conduit à des PCSA de haute basicité possédant des caractéristiques simultanées, de stabilité au stockage, d'élimination de la turbidité et de teneur résiduelle en aluminium dans les eaux traitées.

Les PCSA selon la présente invention peuvent être utilisés dans de nombreux domaines tels que par exemple pour le traitement des eaux potables, des effluents aqueux et dans l'industrie papetière. De préférence, les PCSA de la présente invention peuvent être avantageusement utilisés pour le traitement des eaux potables.

Les exemples qui suivent illustrent l'invention.

**Exemple 1** : (conforme à l'invention)

500 g d'un polychlorure d'aluminium basique sont introduits dans un réacteur de 2 litres. Ce polychlorure contient 11,18 % d'aluminium compté en $Al_2O_3$, 21,61% de chlorure et possède une basicité de 42,9 %. Sa formule brute est : $Al(OH)_{1,28} Cl_{1,71}$.

On ajoute ensuite 19,2 g de chaux $Ca(OH)_2$ dans le réacteur contenant le polychlorure maintenu à 50° C. La durée d'addition est de 45 minutes sous agitation de type Rushton réglée à 800 t/min.

On prépare une solution basique de carbonate de sodium et de sulfate de sodium selon la procédure suivante : 13,15 g d'acide sulfurique à 77,1 % en masse sont versés dans une solution de carbonate de sodium contenant 68,5 g de $Na_2CO_3,H_2O$ et 300 g d'eau.

Cette solution basique préchauffée à 50°C est ajoutée sous forte turbulence dans le réacteur contenant le polychlorure et $Ca(OH)_2$ maintenus à 50°C et cela en 30 minutes.

En fin de basification la vitesse d'agitation est réduite à 200 tours/minute.

10 g de gypse solide $CaSO_4, 2H_2O$ sont alors ajoutés afin d'avoir une concentration constante en CaSO4, $2H_2O$ et la température est portée de 50°C à 85°C en 30 minutes, puis il est pratiqué une cuisson de 1h à 85° C sous agitation réglée à 200 tours / minute.

Le produit est refroidi à 40°C en 30 minutes puis filtré. Le gypse est recyclable.

Le filtrat récupéré, titrant environ 9 % en alumine, est dilué par ajout d'eau jusqu'à atteindre une densité de 1,203, soit une teneur pondérale en alumine de 8,5 %.

La composition chimique en poids, déterminée par analyse, est la suivante :

| | |
|---|---|
| $Al_2O_3$ | 8,71 % |
| $Ca^{2+}$ | 0,99 % |
| $Na^+$ | 2,20 % |
| $Cl^-$ | 10,45 % |
| $SO_4^{2-}$ | 0,93 % |
| eau | 76,9 % calculée par différence. |

La réaction établie à partir des réactifs et de l'analyse des produits finis est la suivante :

$$Al(OH)_{1,28} Cl_{1,71} + 0,14\ Ca(OH)_2 + 0,223\ Na_2CO_3 + 0,057\ Na_2SO_4 + 0,223\ H_2O \rightarrow$$

$$Al(OH)_{2,01}Cl_{0,87}(SO_4)_{0,057} + 0,14\ CaCl_2 + 0,560\ NaCl + 0,223\ CO_2$$

d'où une basicité de 2,01/3 = 67,1 %

**Exemple 2** : (conforme à l'invention)

500 g d'un polychlorure d'aluminium basique sont introduits dans un réacteur de 2 litres. Ce polychlorure contient 18,33% d'aluminium compté en $Al_2O_3$, 21,78% de chlorure et a une basicité de 43,1 %. Sa formule brute est : $Al(OH)_{1,29} Cl_{1,71}$.

On ajoute ensuite 19,2 g de $Ca(OH)_2$ dans le réacteur contenant le polychlorure maintenu à 50° C. La durée d'addition est de 45 minutes sous agitation de type Rushton réglée à 800 t/min.

On prépare une solution basique de carbonate de sodium et de sulfate de sodium selon la procédure suivante :

13,15 g d'acide sulfurique à 77,1 % en masse sont versés dans une solution de carbonate de sodium contenant 68,5 g de $Na_2CO_3,H_2O$ et 300 g d'eau.

Cette solution basique préchauffée à 50°C est ajoutée sous forte turbulence dans le réacteur contenant le polychlorure et $Ca(OH)_2$ maintenus à 50°C et cela en 30 minutes.

En fin de basification la vitesse d'agitation est réduite à 200 tours/minute.

La température est portée de 50°C à 85°C en 15 minutes, puis il est pratiqué une cuisson de 1 h à 85° C sous agitation réglée à 200 tours/ minute.

Le produit est refroidi à 40°C en 30 minutes puis clarifié par filtration. Le résidu est inférieur à 0,5 g/kg.

Le filtrat récupéré, titrant environ 9 % en alumine, est dilué par ajout d'eau jusqu'à atteindre une densité de 1,205, soit une teneur pondérale en alumine de 8,5 %.

La composition chimique en poids, déterminée par analyse, est la suivante :

| $Al_2O_3$ | 8,64 % |
|---|---|
| $Ca^{2+}$ | 0,92 % |
| $Na^+$ | 2,25 % |
| $Cl^-$ | 10,21 % |
| $SO_4^{2-}$ | 0,92 % |
| eau | 76,9 % calculée par différence. |

La réaction établie à partir des réactifs et de l'analyse des produits finis est la suivante :

$$Al\,(OH)_{1,29}\,Cl_{1,71} + 0,15\,Ca(OH)_2 + 0,229\,Na_2CO_3 + 0,063\,Na_2SO_4 + 0,229\,H_2O \rightarrow$$

$$Al(OH)_{2,03}Cl_{0,84}(SO_4)_{0,063} + 0,15\,CaCl_2 + 0,584\,NaCl + 0,229\,CO_2$$

d'où une basicité de 2,03/3 = 67,7 %

**Exemple 3** (conforme à l'invention)

On opère comme dans l'exemple 2 avec les mêmes réactifs, sauf que la montée en température de 50° C à 80°C est réalisée en 30 minutes et que la température de cuisson est réalisée à 80°C pendant 1 h 30 minutes sous agitation réglée à 200 tours / minute.

**Exemple 4** (conforme à l'invention)

On opère comme dans l'exemple 2 avec les mêmes réactifs sauf que la montée en température de 50° C à 90°C est réalisée en 30 minutes, et que la température de cuisson est réalisée à 90°C pendant 20 minutes sous agitation réglée à 200 tours / minute.

**Exemple 5** ( conforme à l'invention)

On opère comme dans l'exemple 2 avec les mêmes réactifs sauf que la montée en température de 50° C à 95°C est réalisée en 30 minutes et que la température de cuisson est réalisée à 95°C pendant 7 minutes sous agitation réglée à 200 tours / minute.

**Exemple 6** (non-conforme à l'invention)

On opère comme dans le brevet EP 0 557 153 sauf que l'on utilise du carbonate de sodium en solution au lieu du carbonate de sodium en poudre. Il n'est pas pratiqué en fin de basification la cuisson de notre invention.

500 g d'un polychlorure d'aluminium basique sont introduits dans un réacteur de 2 litres. Ce polychlorure contient 18,13% d'aluminium compté en $Al_2O_3$, 21,47% de chlorure et a une basicité de 43,3 %. Sa formule brute est : $Al\,(OH)_{1,30}\,Cl_{1,70}$ On prépare une solution basique de carbonate de sodium et de sulfate de sodium selon la procédure suivante :

13,15 g d'acide sulfurique à 77,1 % en masse sont versés dans une solution de carbonate de soude contenant 68,5 g de $Na_2CO_3,H_2O$ et 300 g d'eau.

Cette solution basique préchauffée à 60°C est ajoutée sous forte turbulence dans le réacteur contenant le polychlorure maintenu à 60°C et cela en 20 minutes.

Il est ajouté 19,2 g de $Ca(OH)_2$ dans le réacteur contenant le polychlorure et la solution basique maintenus à 60° C. La durée d'addition est de 45 minutes sous agitation de type Rushton réglée à 800 t/min.

En fin de basification calcique, la vitesse d'agitation est réduite à 200 tours/minute.

Le produit est agité 30 minutes, puis il est refroidi à 40°C en 20 minutes puis filtré.

Le filtrat récupéré, titrant environ 9 % en alumine, est dilué par ajout d'eau jusqu'à atteindre une densité de 1,204, soit une teneur pondérale en alumine de 8,5 %. Il est stocké à température ambiante.

La composition chimique en poids, après analyse, est la suivante :

| Al$_2$O$_3$ | 8,61 % |
|---|---|
| Ca$^{2+}$ | 0,95 % |
| Na$^+$ | 2,25 % |
| Cl$^-$ | 10,26 % |
| SO$_4{}^{2-}$ | 0,93 % |
| eau | 77,0 % calculée par différence. |

La réaction est la suivante :

$$\text{Al(OH)}_{1,30}\,\text{Cl}_{1,70} + 0,14\,\text{Ca(OH)}_2 + 0,233\,\text{Na}_2\text{CO}_3 + 0,063\,\text{Na}_2\text{SO}_4 + 0,233\,\text{H}_2\text{O} \rightarrow$$

$$\text{Al(OH)}_{2,035}\text{Cl}_{0,85}(\text{SO}_4)_{0,067} + 0,14\,\text{CaCl}_2 + 0,579\,\text{NaCl} + 0,233\,\text{CO}_2$$

d'où une basicité de 2,035/3 = 67,8 %

**Exemple 7** (conforme à l'invention)

Le produit obtenu en fin de basification calcique, selon l'exemple 6, est chauffé à 70°C en 20 minutes puis il est pratiqué une cuisson à 70° C pendant 2 h 30 sous agitation réglée à 200 t/min. La teneur résiduelle en aluminium dans l'eau traitée s'améliore en passant de 140% (obtenue avec le PCSA selon le procédé du brevet EP 327 419) à 120 % avec le produit du présent exemple.

**Exemple 8** (conforme à l'invention)

On répète l'expérience décrite dans l'exemple 6 dans d'un réacteur de 200 litres, sauf que l'on introduit d'abord Ca(OH)$_2$, puis le mélange de carbonate de sodium et de sulfate de sodium en solution au niveau de la pâle d'agitation à 5 m/s dans une buse. On pratique la cuisson décrite dans l'exemple 7. On obtient un produit après une cuisson de 2 h 30 min permettant d'obtenir une eau traitée contenant 104 % de l'aluminium résiduel au lieu de 140 % avec le PCSA fabriqué selon l'exemple 6 (PCSA n'ayant pas subi de cuisson).
On s'est aperçu qu'avec ce type de cuisson, à une température de 70°C, il était retrouvé dans le liquide une quantité de gypse en suspension égale à environ 200 g/tonne.

**Exemple 9 :** (conforme à l'invention)

500 g d'un polychlorure d'aluminium basique sont introduits dans un réacteur de 2 litres. Ce polychlorure contient 18,33 % d'aluminium compté en Al$_2$O$_3$, 21,78% de chlorure et a une basicité de 43,1 %. Sa formule brute est Al(OH)$_{1,29}$ Cl$_{1,71}$ Il est ajouté 19,2 g de Ca(OH)$_2$ dans le réacteur contenant le polychlorure maintenu à 50° C. La durée d'addition est de 45 minutes sous agitation de type Rushton réglée à 800 t/min.
On prépare une solution basique de carbonate de sodium et de sulfate de sodium selon la procédure suivante : 13,15 g d'acide sulfurique à 77,1 % en masse sont versés dans une solution de carbonate de sodium contenant 68,5 g de Na$_2$CO$_3$,H$_2$O et 300 g d'eau.
Cette solution basique préchauffée à 50°C est ajoutée sous forte turbulence dans le réacteur contenant le polychlorure et Ca(OH)$_2$ maintenus à 50°C et cela en 30 minutes.
En fin de basification la vitesse d'agitation est réduite à 200 tours/minute. La température est portée de 50°C à 60°C en 10 minutes, puis il est pratiqué une cuisson de 5 h à 60° C sous agitation réglée à 200 tours / minute.
Le produit est refroidi à 40°C en 30 minutes puis filtré.
Le filtrat récupéré, titrant environ 9 % en alumine, est dilué par ajout d'eau jusqu'à atteindre une densité de 1,202, soit une teneur pondérale en alumine de 8,5 %.
La composition chimique en poids, déterminée par analyse est la suivante :

| Al$_2$O$_3$ | 8,46 % |
|---|---|
| Ca$^{2+}$ | 0,95 % |
| Na$^+$ | 2,25 % |
| Cl$^-$ | 10,07 % |

(suite)

| | |
|---|---|
| $SO_4^{2-}$ | 0,95 % |
| eau | 77 % calculée par différence. |

La réaction établie à partir des réactifs et de l'analyse des produits finis est la suivante :

$$Al(OH)_{1,29} Cl_{1,71} + 0,15 Ca(OH)_2 + 0,223 Na_2CO_3 + 0,072 Na_2SO_4 + 0,223 H_2O \rightarrow$$

$$Al(OH)_{2,03}Cl_{0,82}(SO_4)_{0,072} + 0,15 CaCl_2 + 0,590 NaCl + 0,223 CO_2$$

d'où une basicité de 2,03/3 = 67,7 %

**Exemple 10** (conforme à l'invention)

500 g d'un polychlorure d'aluminium basique sont introduits dans un réacteur de 2 litres. Ce polychlorure contient 18,13% d'aluminium compté en $Al_2O_3$, 21,47% de chlorure et a une basicité de 43,3 %. Sa formule brute est $Al(OH)_{1,30} Cl_{1,70}$.

13,15 g d'acide sulfurique à 77,1 % en masse sont versés dans ledit polychlorure, à 50°C, en 14 minutes.

On ajoute ensuite 19,2 g de $Ca(OH)_2$ à 50°C. La durée d'addition est de 45 minutes sous agitation de type Rushton réglée à 800 t/min.

L'addition de $Ca(OH)_2$ terminée, on ajoute une solution de carbonate de sodium contenant 68,5 g de $Na_2CO_3$, $H_2O$ et 300 g d'eau sous forte turbulence maintenu à 50°C en 20 minutes.

En fin de basification la vitesse d'agitation est réduite à 200 tours/minute et le produit est chauffé à 70°C en 15 minutes puis subit une cuisson à 70° C pendant 2 h 30 min sous agitation réglée à 200 tours / minute.

Le produit est refroidit à 40°C en 20 minutes, filtré et dilué avec 121 g d'eau.

Le filtrat récupéré a une densité de 1,204, soit une teneur pondérale en alumine de 8,5 %. Il est stocké à température ambiante.

La composition chimique en poids, après analyse, est la suivante :

| | |
|---|---|
| $Al_2O_3$ | 8,51 % |
| $Ca^{2+}$ | 0,92 % |
| $Na^+$ | 2,37 % |
| $Cl^-$ | 10,04 % |
| $SO_4^{2-}$ | 0,90 % |
| eau | 77,25 % calculée par différence. |

La réaction est la suivante :

$$Al(OH)_{1,30} Cl_{1,70} + 0,14 Ca(OH)_2 + 0,254 Na_2CO_3 + 0,056 Na_2SO_4 + 0,254 H_2O \rightarrow$$

$$Al(OH)_{2,08}Cl_{0,81}(SO_4)_{0,06} + 0,14 CaCl_2 + 0,62 NaCl + 0,254 CO_2$$

d'où une basicité de 2,08/3 = 69,3 %

**Exemple 11** (conforme à l'invention)

Il est réalisé le même essai que l'exemple 7 sauf que $Ca(OH)_2$ est introduit en deuxième et le mélange de solution basifiante de carbonate et de sulfate de sodium en premier.

On obtient les mêmes résultats analytiques que pour le PCSA de l'exemple 7.

**Exemple 12** (conforme à l'invention)

750 g d'un polychlorure d'aluminium basique sont introduits dans un réacteur de 2 litres. Ce polychlorure contient 18,33% d'aluminium compté en $Al_2O_3$, 21,78% de chlorure et a une basicité de 43,1 %. Sa formule brute est

Al(OH)$_{1,30}$ Cl$_{1,70}$ On ajoute 28,8 g de Ca(OH)$_2$ dans le réacteur contenant le polychlorure maintenu à 50° C. La durée d'addition est de 45 minutes sous agitation de type Rushton réglée à 800 t/min.

On prépare une solution basique de NaOH et de sulfate de sodium selon la procédure suivante :
19,7 g d'acide sulfurique à 77,1 % en masse sont versés dans 363,4 g d'une solution de NaOH à 6 moles de NaOH/l puis rajout de 88,7 g d'eau.

Cette solution basique préchauffée à 50°C est ajoutée sous forte turbulence dans le réacteur contenant le polychlorure et Ca(OH)$_2$ maintenus à 50°C et cela en 20 minutes.

En fin de basification la vitesse d'agitation est réduite à 200 tours/minute puis on laisse agiter 10 minutes.

La température est portée de 50°C à 70°C en 25 minutes, puis il est pratiqué une cuisson de 2 h 30 minutes à 70° C sous agitation réglée à 200 tours / minute.

Le produit est refroidi à 40°C en 30 minutes puis clarifié par filtration. Le résidu est inférieur à 0,2 g/kg.

Le filtrat récupéré, titrant environ 9 % en alumine, est dilué par ajout d'eau jusqu'à atteindre une densité de 1,202, soit une teneur pondérale en alumine de 8,5 %.

La composition chimique en poids, déterminée par analyse, est la suivante :

| | |
|---|---|
| Al$_2$O$_3$ | 8,57 % |
| Ca$^{2+}$ | 0,89 % |
| Na$^+$ | 2,50 % |
| Cl$^-$ | 10,11 % |
| SO$_4{}^{2-}$ | 0,92 % |
| eau | 77,0 % calculée par différence. |

La réaction établie à partir des réactifs et de l'analyse des produits finis est la suivante :

$$Al\,(OH)_{1,29}\,Cl_{1,71} + 0,13\,Ca(OH)_2 + 0,536\,NaOH + 0,057\,Na_2SO_4 \rightarrow$$

$$Al(OH)_{2,10}Cl_{0,78}(SO_4)_{0,057} + 0,13\,CaCl_2 + 0,65\,NaCl$$

d'où une basicité de 2,1/3 = 70,0 %

**Exemple 13** (conforme à l'invention)

500 g d'un polychlorure d'aluminium basique sont introduits dans un réacteur de 2 litres. Ce polychlorure contient 18,33% d'aluminium compté en Al$_2$O$_3$, 21,78% de chlorure et a une basicité de 43,1 %. Sa formule brute est Al(OH)$_{1,29}$ Cl$_{1,71}$ On ajoute 30,06 g de chlorure de calcium dans le réacteur contenant le polychlorure maintenu à 50° C. La pureté du CaCl$_2$ est de 96%, le reste étant du NaCl et de l'eau. La durée d'addition est de 30 minutes sous agitation de type Rushton réglée à 800 t/min. 15 minutes supplémentaires sont nécessaires pour dissoudre le chlorure de calcium.

On prépare une solution basique de NaOH et de sulfate de sodium selon la procédure suivante :
13,15 g d'acide sulfurique à 77,1 % en masse sont versés dans 325,8 g d'une solution de NaOH à 6 moles de NaOH /litre puis rajout de 42,7 g d'eau.

Cette solution est préchauffée à 50°C puis ajoutée sous forte turbulence à une vitesse linéaire d'environ 4m/s dans le réacteur contenant le polychlorure et CaCl$_2$ maintenus à 50°C et cela en 20 minutes.

En fin de basification la vitesse d'agitation est réduite à 200 tours/minute puis on laisse agiter 10 minutes.

La température est portée de 50°C à 70°C en 25 minutes, puis il est pratiqué une cuisson de 2 heures à 70° C sous agitation réglée à 200 tours / minute.

Le produit est refroidi à 40°C en 30 minutes puis clarifié par filtration. Le résidu est inférieur à 0,1 g/kg

Le filtrat récupéré est dilué par ajout d'eau jusqu'à atteindre une densité de 1,202, soit une teneur pondérale en alumine de 8,5 %.

La composition chimique en poids, déterminée par analyse, est la suivante :

| | |
|---|---|
| Al$_2$O$_3$ | 8,00 % |
| Ca$^{2+}$ | 0,75 % |
| Na$^+$ | 3,05 % |
| Cl$^-$ | 10,68 % |

(suite)

| SO$_4$$^{2-}$ | 0,85 % |
|---|---|
| eau | 76,7 % calculée par différence. |

La réaction établie à partir des réactifs et de l'analyse des produits finis est la suivante :

$$Al\ (OH)_{1,29}\ Cl_{1,71} + 0,12\ CaCl_2 + 0,738\ NaOH + 0,056\ Na_2SO_4 \rightarrow$$

$$Al(OH)_{2,05}Cl_{0,83}(SO_4)_{0,056} + 0,12\ CaCl_2 + 0,85\ NaCl$$

d'où une basicité de 2,05/3 = 68,5 %

**Exemple 14** (conforme à l'invention)

500 g d'un polychlorure d'aluminium basique sont introduits dans un réacteur de 2 litres. Ce polychlorure contient 18,33 % d'aluminium compté en $Al_2O_3$, 21,78% de chlorure et a une basicité de 43,1 %. Sa formule brute est $Al(OH)_{1,29}\ Cl_{1,71}$ 168,8 g d'une solution de NaOH à 6 moles de NaOH/l est diluée avec 200 g d'eau. Elle est préchauffée à 50°C, puis elle est ajoutée en 20 minutes, sous forte turbulence dans le réacteur contenant le polychlorure maintenu à 50°C.

On ajoute ensuite 19,2 g de $Ca(OH)_2$ dans le réacteur contenant le polychlorure et la solution de NaOH maintenus à 50° C. La durée d'addition est de 45 minutes sous agitation de type Rushton réglée à 800 t/min.

En fin de basification la vitesse d'agitation est réduite à 200 tours/minute puis on laisse agiter 10 minutes.

Il est alors ajouté 18,7 g de sulfate de sodium anhydre en dix minutes.

La température est portée de 50°C à 70°C en 25 minutes, puis il est pratiqué une cuisson de 2 heures à 70° C sous agitation réglée à 200 tours / minute.

Le produit est refroidit à 40°C en 30 minutes puis clarifié par filtration.

Le filtrat récupéré est dilué par ajout d'eau jusqu'à atteindre une densité de 1,202, soit une teneur pondérale en alumine de 8,5 %.

La composition chimique en poids, déterminée par analyse est la suivante :

| $Al_2O_3$ | 8,51 % |
|---|---|
| $Ca^{2+}$ | 0,92 % |
| $Na^+$ | 2,30 % |
| $Cl^-$ | 10,04 % |
| $SO_4$$^{2-}$ | 1,18 % |
| eau | 77,0 % calculée par différence. |

La réaction établie à partir des réactifs et de l'analyse des produits finis est la suivante :

$$Al\ (OH)_{1,29}\ Cl_{1,71} + 0,14\ Ca(OH)_2 + 0,452\ NaOH + 0,074\ Na_2SO_4 \rightarrow$$

$$Al(OH)_{2,03}Cl_{0,82}(SO_4)_{0,074} + 0,14\ CaCl_2 + 0,60\ NaCl$$

d'où une basicité de = 2,03/3 = 67,7 %

**Exemple 15** (conforme à l'invention)

500 g d'un polychlorure d'aluminium basique sont introduits dans un réacteur de 2 litres. Ce polychlorure contient 18,54% d'aluminium en $Al_2O_3$, 21,78% de chlorure et a une basicité de 43,7 %. Sa formule brute est $Al(OH)_{1,29}\ Cl_{1,71}$.

Il est ajouté 7,7 g de $Ca(OH)_2$ dans le réacteur contenant le polychlorure maintenu à 50° C. La durée d'addition est de 20 minutes sous agitation de type Rushton réglée à 800 t/min.

On prépare une solution basique de carbonate de sodium et de sulfate de sodium selon la procédure suivante :

1,1 g d'acide sulfurique à 77,1 % en masse sont versés dans une solution de carbonate de sodium contenant 76,1 g de $Na_2CO_3,H_2O$ et 300 g d'eau.

Cette solution basique préchauffée à 50°C est ajoutée sous forte turbulence dans le réacteur contenant le polychlorure et $Ca(OH)_2$ maintenus à 50°C et cela en 30 minutes.

En fin de basification la vitesse d'agitation est réduite à 200 tours/minute.

Le gâteau de filtration 20 g de gypse solide $CaSO_4,2\,H_2O$ récupéré de plusieurs essais identiques à l'exemple 1 est ajouté dans le réacteur en tant que réactif pour saturer la solution. Un complément de 10 g de gypse est ajouté selon l'exemple 1 et la température est portée de 50°C à 85°C en 30 minutes, puis il est pratiqué une cuisson de 1 h à 85° C, sous agitation réglée à 200 tours / minute.

Le produit est refroidit à 40°C en 30 minutes puis filtré. Le gypse filtré, 8 g, peut alors être de nouveau recyclé.

Le filtrat récupéré, titrant environ 9 % en alumine, est dilué par ajout d'eau jusqu'à atteindre une densité de 1,202, soit une teneur pondérale en alumine de 8,5 %.

La composition chimique en poids, déterminée par analyse, est la suivante :

| | |
|---|---|
| $Al_2O_3$ | 8,47 % |
| $Ca^{2+}$ | 0,88 % |
| $Na^+$ | 2,40 % |
| $Cl^-$ | 10,05 % |
| $SO_4^{2-}$ | 1,25 % |
| eau | 77,0 % calculée par différence. |

La réaction établie à partir des réactifs et de l'analyse des produits finis est la suivante :

$$Al\,(OH)_{1,28}\,Cl_{1,71} + 0,059\,Ca(OH)_2 + 0,071\,CaSO_4 + 0,0066\,Na_2SO_4 + 0,308\,Na_2CO_3 + 0,308\,H_2O \rightarrow$$

$$Al(OH)_{2,03}Cl_{0,81}(SO_4)_{0,078} + 0,13\,CaCl_2 + 0,630\,NaCl + 0,308\,CO_2$$

d'où une basicité de 2,03/3 = 67,7 %

**Exemple 16** (non conforme à l'invention)

Selon l'exemple n° 1 de la demande de BREVET CANADIEN n° 2109756. 350,6 g de polychlorure d'aluminium basic PAC 5/6 à 50% sont placés dans un réacteur de 1 litre équipé d'un agitateur et d'un réfrigérant condenseur. Le PAC contient 12,39 % d'aluminium et 8,27 % de chlorure soit $Al(OH)_{2,49}\,Cl_{0,51}$.

La solution est chauffée à 80°C puis 136,8 g d'acide chlorhydrique à 20°Baumé sont versés sur une période de 7 minutes. Cet acide de densité 1,16 à 20°C contient 32,14 % massique d'HCl. La température est augmentée à 95°C puis maintenue pendant 1 heure sous agitation continue. La température est alors réduite à 85°C. La composition du milieu réactionnel est la suivante :

| | |
|---|---|
| $Al_2O_3$ | 8,32 % |
| $Cl^-$ | 11,96 % |

ce qui correspond à la formule $Al(OH)_{0,93}\,Cl_{2,06}$
et à une basicité de 0,93/3= 31 %

31,3 g d'acide sulfurique à 60°Baumé sont ajoutés sur une période de 12 minutes. L'acide sulfurique a une densité de 1,71 à 15°C et contient 78,5 % de $H_2SO_4$. La température est maintenue à 85°C pendant 30 minutes de plus. Le chauffage est arrêté et la solution est laissée à refroidir pendant 2 heures jusqu'à 40°C. L'agitation est maintenue.

280,6 g d'eau sont ajoutés sous agitation à 40°C. La solution est claire, sans précipité, et stable pendant 30 jours Sa composition chimique en poids, déterminée par analyse, est la suivante :

| | |
|---|---|
| $Al_2O_3$ | 5,24 % |
| $Cl^-$ | 7,39 % |
| $SO_4^{2-}$ | 3,06 % |

ce qui correspond à la formule : $Al(OH)_{0,35}\,Cl_{2,06}\,(SO_4^{2-})_{0,31}$

d'où une basicité de 0,35/3=11,7 %, alors que dans ladite demande de brevet canadien, il est indiqué la composition pondérale finale suivante :

| | |
|---|---|
| $Al_2O_3$ | 10,36 % |
| $Cl^-$ | 8,84 % |
| $SO_4^{2-}$ | 2,93 % |

soit pour formule $Al(OH)_{1,47} Cl_{1,23} (SO_4^{2-})_{0,15}$
soit une basicité de 1,47/3=49 %

**Exemple 17** (non conforme à l'invention)

On opère selon les conditions dans l'exemple 4 du brevet FR 2317227 avec les réactifs ci-après :

500 g d'un polychlorure d'aluminium basique sont introduits dans un réacteur de 2 litres. Ce polychlorure contient 16,58 % d'aluminium compté en $Al_2O_3$, 22,24% de chlorure et a une basicité de 43,7 %. Sa formule brute est $Al(OH)_{1,07} Cl_{1,93}$. On chauffe le polychlorure à 30°C sous agitation de type Rushton réglée à 200 t/min.

Une solution basique de carbonate de sodium est fabriquée selon la procédure suivante :
44,29 g de $Na_2CO_3,H_2O$ sont introduits dans 141 g d'eau.

Cette solution basique préchauffée à 30°C est ajoutée en 1 heure sous forte turbulence dans le réacteur contenant le polychlrorure maintenu à 30°C.

88,9 g de sulfate de soude hydraté $Na_2SO_4,10 H_2O$ sont introduits dans le réacteur en 10 minutes puis on maintient l'agitation pendant 3 heures.

La densité est de 1,289. La composition chimique en poids, déterminée par analyse, est la suivante :

| | |
|---|---|
| $Al_2O_3$ | 10,74 % |
| $Na^+$ | 3,70 % |
| $Cl^-$ | 14,50 % |
| $SO_4^{2-}$ | 3,52 % |
| eau | 67,54 % calculée par différence. |

La réaction établie à partir des réactifs et de l'analyse des produits finis est la suivante :

$$Al (OH)_{1,07} Cl_{1,93} + 0,17 Na_2SO_4 + 0,38 Na_2CO_3 + 0,38 H_2O \rightarrow$$

$$Al(OH)_{1,48}Cl_{1,18}(SO_4)_{0,17} + 0,76 NaCl + 0,38 CO_2$$

d'où une faible basicité de 1,48/3 = 49,3 %

Le produit fabriqué ci-dessus peut s'écrire sous la forme $Al(OH)_{1,48}Cl_{1,94}(SO_4)_{0,17}Na_{0,76}$ ce qui est conforme au produit décrit dans le brevet 2 317 227 ayant la formule suivante : $Al(OH)_{1,48}Cl_{1,95}(SO_4)_{0,15}Na_{0,73}$ **Exemple 18** (non conforme à l'invention)

Si on effectue une cuisson à 80° C, pendant 20 minutes du produit obtenu selon l'exemple 17 - produit qui ne contient pas de composé basique d'un métal alcalino-terreux -, on constate que les solutions de PCSA obtenues ne sont pas stables dans le temps, ni à l'ambiante, ni à 45° C. Des solides se déposent en forte quantité au fond des flacons.

Avant de rassembler, dans un tableau, tous les résultats des tests d'applications en traitement d'eau des produits des exemples précédents il est décrit les méthodes d'évaluation des produits.

**MESURE DE LA TURBIDITE RESIDUELLE** :

On utilisera comme produit de référence un PCSA obtenu selon le brevet EP 327419 conduisant à un effluent de gypse de 350 kg par tonne de PCSA et qui a la composition chimique pondérale ci-après :

| | |
|---|---|
| $Al_2O_3$ | 8,5 % |
| $Ca^{2+}$ | 1,23 % |

(suite)

| Cl⁻ | 6,44 % |
|---|---|
| $SO_4^{2-}$ | 1,53 % |

Basicité de 69,6 %.

On introduit la veille dans un bac de 30 litres, 20 litres d'eau de Seine pour permettre à l'eau d'atteindre la température ambiante.

Cette eau contient les sels suivants : $Na_2SO_4$, $NaHCO_3$, $CaCl_2$, $MgCl_2$. Elle est maintenue sous agitation constante à 100 tours/minute. Dans 1 litre de cette eau, on a les quantités de sel (exprimées en mg) suivantes :

| $Na_2SO_4$ | $NaHCO_3$ | Calcium | Magnésium | Argiles | Matières Organiques |
|---|---|---|---|---|---|
| 74 | 336 | 80 | 12,2 | 50 | 14 |

Cette eau a une turbidité de 9 à 10 NTU et un pH de 8,2 à 8,5.

Les tests sont réalisés sur un floculateur HYDROCURE (de chez Orchidis)de la façon suivante :

- introduction dans chaque vase du " JAR-TEST " d'un litre d'eau de Seine, mise sous agitation à 100 tours/minutes,
- préparation de solutions des échantillons de PCSA à tester et du produit de référence, par dilution environ au centième des produits obtenus dans de l'eau déminéralisée, puis repos 1 heure des solutions, soit 2,94 g de PCSA de référence titrant 8,5 % d'$Al_2O_3$ introduit dans la fiole de 250 ml complétée à l'eau, les solutions sont stables à la dilution pendant au moins 2 heures,
- prélever les quantités de produit nécessaire 3 ml, avec les seringues (solutions diluées au centième titrant 1 g/l d'$Al_2O_3$).
- augmenter la vitesse d'agitation du floculateur jusqu'à 160 tours/minutes,
- injecter les produits, soit 3 mg compté en $Al_2O_3$ par litre d'eau de Seine, dans les vases du " JAR-TEST ",
- déclencher le chronomètre et compter 1 mn 30 s à la fin de l'injection,
- après 1 mn 30 s d'agitation rapide, on ralentit la vitesse d'agitation à 40 tours/minute,
- après 13 mn 30 s à 40 tours/minute, l'agitation est arrêtée et les pâles d'agitation sont relevées,
- au bout de 20 minutes de DECANTATION, on introduit un tuyau de prélèvement de la pompe péristaltique dans chaque vase à une profondeur de 5 cm au dessous de la surface et au centre du vase.

On met en route la pompe et on prélève environ 40 ml. Le débit de prélèvement de la pompe est réglé de telle sorte que la durée de prélèvement ne dépasse pas 3 min. Ces échantillons seront destinés à la mesure de la turbidité résiduelle. La mesure s'effectue sur un turbidimètre RATIO/XR HACH.

Les résultats sont exprimés en NTU (=Nephelometric Turbidity Unit),unité corrélée à la quantité résiduelle de particules dans les eaux traitées.

On effectue quatre essais.

On mesure pour chaque essai et pour chaque produit la valeur de turbidité Tp, ou pour le PCSA de référence Tr, puis on exprime la différence d'élimination de turbidité selon la relation suivante :

$$\text{Moyenne de NTU en \% = Moyenne de } (Tp_{1à4}/Tr_{1à4}) \times 100$$

Ecart type en pourcentage sur la somme des rapports $(Tp_{1à4}/Tr_{1à4}) \times 100$

**MESURE DE L'ALUMINIUM RESIDUEL :**

Ce test est réalisé sur les échantillons après 20 minutes de décantation. Les solutions surnageantes sont filtrées sur membranes Millipore à 0,45 $\mu$m. L'ajout d'une goutte d'acide nitrique concentré ULTRA-PUR évite la précipitation éventuelle de l'aluminium. La mesure se fait par Absorption Atomique Electrothermique NFT 90-119 1993. L'unité est le $\mu$g/l.

On mesure pour chaque essai et pour chaque produit la teneur résiduelle en aluminium Alp, ou pour le PCSA de référence Alr, puis on exprime la différence de teneur résiduelle en aluminium, selon la relation suivante :

$$\text{Moyenne de } Al_{rés} \text{ en \% = Moyenne de } (Alp_{1à4}/Alr_{1à4}) \times 100$$

Ecart type en pourcentage sur la somme des rapports $(Alp_{1à4}/Alr_{1à4})$ x 100

**STABILITE à 40°C :**

Elle est notée par rapport à l'apparition de solide au fond des flacons soit sous forme cristallisée, soit sous forme de trouble avec dépôt floconneux. Elle doit être d'au moins 1 mois.

**STABILITE à température ambiante :**

Elle est notée par rapport à l'apparition de solide au fond des flacons. Elle doit être d'au moins 3 mois. Les stabilités sont effectuées sur des solutions de PCSA ayant une quantité pondérale en $Al_2O_3$ au moins égale à 8 %.
Les résultats sont rassemblés dans le tableau ci-après .
Dans ce tableau :

- NC : exemple non conforme à l'invention.
- NTU (%) représente la moyenne de NTU en % selon la relation précédemment mentionnée.
- $Al_{rés}$ (%) représente la moyenne de $Al_{rés}$ en % selon la relation précédemment mentionnée.
- ++++signifie très important
- +++ signifie moyen
- ++ signifie faible
- + signifie très faible

| | NTU | $Al_{rés}$ | aspect | STABILITE | |
|---|---|---|---|---|---|
| **Exemples** | **(en %)** | **(en %)** | **flocs** | **A 25° C** | **A 40° C** |
| exemple 1 | $103 \pm 9$ | $106 \pm 5$ | gros | >3 mois | >1 mois |
| exemple 2 | $118 \pm 18$ | $97 \pm 15$ | gros | >3 mois | >1 mois |
| exemple 3 | $105 \pm 10$ | $110 \pm 10$ | gros | >3 mois | >1 mois |
| exemple 4 | $160 \pm 25$ | $119 \pm 13$ | gros | >3 mois | >1 mois |
| exemple 5 | $100 \pm 15$ | $114 \pm 7$ | gros | >3 mois | >1 mois |
| exemple 6 NC | $75 \pm 10$ | $140 \pm 9$ | moyen | >3 mois | >1 mois |
| exemple 7 | $90 \pm 10$ | $120 \pm 10$ | gros | >3 mois | >1 mois |
| exemple 8 | $101 \pm 15$ | $105 \pm 4$ | gros | >3 mois | >1 mois |
| exemple 9 | $90 \pm 20$ | $116 \pm 2$ | gros | >3 mois | >1 mois |
| exemple 10 | $96 \pm 20$ | $116 \pm 7$ | gros | >3 mois | >1 mois |
| exemple 11 | $92 \pm 11$ | $117 \pm 8$ | gros | >3 mois | >1 mois |
| exemple 12 | $94 \pm 13$ | $107 \pm 7$ | gros | >3 mois | >1 mois |
| exemple 13 | $90 \pm 5$ | $122 \pm 3$ | gros | >3 mois | >1 mois |
| exemple 14 | $91 \pm 7$ | $125 \pm 3$ | gros | >3 mois | >1 mois |
| exemple 15 | $120 \pm 40$ | $101 \pm 15$ | moyen | >3 mois | >1 mois |
| exemple 16 NC | $212 \pm 32$ | $170 \pm 20$ | moyen | >3 mois | >1 mois |
| exemple 17 NC | $70 \pm 9$ | $193 \pm 12$ | gros | <2 mois cristal ++++ | <1/2 mois cristal ++++ |
| exemple 18 NC | $250 \pm 30$ pas de floculation | filtration non-réprésentative | pas de flocs | <1 mois cristal ++++ | <1/4 mois cristal ++++ |
| PCSA de référence | 100 | 100 | moyen | >3 mois | >1 mois |

On constate que les produits obtenus selon la présente invention (exemples 1 à 5 et 7 à 15) sont :

- stables (>3 mois à l'ambiante et > 1 mois à 40° C),
- permettent d'obtenir des eaux traitées ayant une concentration en Aluminium résiduel inférieure à 125 % de PCSA de référence et,
- permettent une efficacité de floculation inférieure à 125 % par rapport au PCSA de référence.

## Revendications

1. Procédé de préparation de polychlorosulfate d'aluminium à haute basicité présentant la formule générale :

$$Al(OH)_a Cl_b Y_c / dM'Cl_2 / eM''Cl \qquad (I)$$

dans laquelle

Y représente un anion de valence 2, tel que $SO4^{2-}$,
M' représente un cation de valence 2, tel qu'un métal alcalino-terreux,
M'' représente un cation de valence 1, tel qu'un métal alcalin ou l'ammonium,
a, b, c et d sont des nombres entiers positifs ou fractionnaires positifs non nuls et
e peut être nul ou un nombre entier positif ou fractionnaire positif tels que

1,8 < a < 2,25
0,001 < c < 0,150
b = 3 - 2c - a et 2d + e + b ≤ 3,
et ayant une basicité β comprise entre 60 % et 75 %, cette basicité étant définie par la formule β = 100 x (3Al + 2M' + M'' - 2Y - Cl) /3Al dans laquelle Al, M', M'', Y et Cl sont exprimés en mole, ledit procédé consistant à mettre en contact un composé basique d'un métal alcalin, de préférence en solution aqueuse et au moins un composé basique d'un métal alcalino-terreux ou un halogénure d'un métal alcalino-terreux, en suspension aqueuse ou en poudre, en présence d'ions sulfate avec une solution de chlorure d'aluminium basique de formule :

$$Al(OH)_x Cl_y \qquad (II)$$

dans laquelle x est un nombre compris entre 0,1 et 1,5 et y = 3-x, à une température comprise entre la température ambiante (environ 25° C) et 70° C, ledit procédé étant caractérisé en ce que l'on réalise après la basification une cuisson du milieu réactionnel obtenu, à une température, dite température de cuisson, comprise entre 60° C et 95° C, d'une façon telle que la durée de cuisson est comprise entre 3 h et 20 h et, de préférence comprise entre 5 h et 9 h pour une température de cuisson de 60° C et que la durée de cuisson est comprise entre 5 minutes et 15 minutes et, de préférence entre 7 minutes et 10 minutes pour une température de cuisson de 95° C.

2. Procédé selon la revendication 1, caractérisé en ce que pour une température de cuisson de 60° C, la durée de cuisson est comprise entre 5h et 9h.

3. Procédé selon la revendication 1, caractérisé en ce que pour une température de cuisson de 95° C, la durée de cuisson est comprise entre 7 minutes et 10 minutes.

4. Procédé selon la revendication 1, caractérisé en ce que pour une température de cuisson de 70° C, la durée de cuisson est comprise entre 1h et 5h.

5. Procédé selon la revendication 4, caractérisé en ce que pour une température de cuisson de 70° C, la durée de cuisson est comprise entre 1h et 4h.

6. Procédé selon la revendication 1, caractérisé en ce que pour une température de cuisson de 80° C, la durée de cuisson est comprise entre 10 minutes et 1 heure 45 minutes.

**7.** Procédé selon la revendication 6, caractérisé en ce que pour une température de cuisson de 80° C, la durée de cuisson est comprise entre 30 minutes et 1 heure 30 minutes.

**8.** Procédé selon la revendication 1, caractérisé en ce que pour une température de cuisson de 85° C, la durée de cuisson est comprise entre 10 minutes et 1 heure 45 minutes.

**9.** Procédé selon la revendication 8, caractérisé en ce que pour une température de cuisson de 85° C, la durée de cuisson est comprise entre 30 minutes et 1 heure.

**10.** Procédé selon la revendication 1, caractérisé en ce que pour une température de cuisson de 90° C, la durée de cuisson est comprise entre 5 minutes et 45 minutes.

**11.** Procédé selon la revendication 10, caractérisé en ce que pour une température de cuisson de 90° C, la durée de cuisson est comprise entre 7 minutes et 10 minutes.

**12.** Procédé selon la revendication 1, caractérisé en ce que le composé basique d'un métal alcalin est choisi parmi NaOH, KOH, NaHCO$_3$, Na$_2$CO$_3$, K$_2$CO$_3$, KHCO$_3$ et les mélanges d'au moins deux des composés basiques d'un métal alcalin énumérés ci-avant.

**13.** Procédé selon la revendication 12, caractérisé en ce que le composé basique d'un métal alcalin est NaOH ou Na$_2$CO$_3$.

**14.** Procédé selon la revendication 1, caractérisé en ce que le composé basique d'un métal alcalino-terreux est choisi parmi CaO, MgO, Ca(OH)$_2$, Mg(OH)$_2$, CaCO$_3$, et les mélanges d'au moins deux des composés basiques d'un métal alcalino-terreux énumérés ci-avant.

**15.** Procédé selon la revendication 14, caractérisé en ce que le composé basique d'un métal alcalino-terreux est Ca(OH)$_2$, Mg(OH)$_2$ ou MgO.

**16.** Procédé selon la revendication 1, caractérisé en ce que l'halogènure d'un métal alcalino-terreux est CaCl$_2$ ou MgCl$_2$.

**17.** Procédé selon la revendication 14, caractérisé en ce que l'halogènure d'un métal alcalino-terreux est CaCl$_2$.

**18.** Procédé selon la revendication 1, caractérisé en ce que la basicité β du polychlorosulfate d'aluminium haute basicité de formule (I) est comprise entre 65 % et 70 %.

**19.** Application des polychlorosulfates d'aluminium haute basicité de formule (I) obtenus par un procédé selon l'une des revendications 1 à 18 au traitement des eaux potables.

**Claims**

**1.** Process for the preparation of polyaluminium chlorosulphate of high basicity, having the general formula:

$$Al\,(OH)_aCl_bY_c/dM'Cl_2/eM''Cl \qquad (I)$$

in which

Y represents an anion of valency 2, such as SO$_4{}^{2-}$,
M' represents a cation of valency 2, such as an alkaline-earth metal,
M'' represents a cation of valency 1, such as an alkali metal or ammonium,
a, b, c and d are non-zero positive integers or positive fractions and
e may be zero or a positive integer or positive fraction such that

1.8 < a < 2.25

$0.001 < c < 0.150$

$b = 3 - 2c - a$ and $2d + e + b \leq 3$,

and having a basicity $\beta$ between 60 % and 75 %, this basicity being defined by the formula $\beta = 100 \times (3Al + 2M' + M'' - 2Y - Cl)/3Al$ in which Al, M', M'', Y and Cl are expressed in moles, the said process consisting in placing a basic compound of an alkali metal, preferably in aqueous solution, and at least one basic compound of an alkaline-earth metal or a halide of an alkaline-earth metal, in aqueous suspension or as powder, in the presence of sulphate ions, in contact with a solution of basic aluminium chloride of formula:

$$Al(OH)_x Cl_y \qquad \qquad \text{(II)}$$

in which x is a number between 0.1 and 1.5 and y = 3-x, at a temperature between room temperature (about 25°C) and 70°C, the said process being characterized in that after the basification, the reaction medium obtained is cooked at a temperature, known as the cooking temperature, between 60°C and 95°C, such that the cooking time is between 3 h and 20 h, and preferably between 5 h and 9 h for a cooking temperature of 60°C and such that the cooking time is between 5 minutes and 15 minutes, and preferably between 7 minutes and 10 minutes, for a cooking temperature of 95°C.

2. Process according to Claim 1, characterized in that for a cooking temperature of 60°C, the cooking time is between 5 h and 9 h.

3. Process according to Claim 1, characterized in that for a cooking temperature of 95°C, the cooking time is between 7 minutes and 10 minutes.

4. Process according to Claim 1, characterized in that for a cooking temperature of 70°C, the cooking time is between 1 h and 5 h.

5. Process according to Claim 4, characterized in that for a cooking temperature of 70°C, the cooking time is between 1 h and 4 h.

6. Process according to Claim 1, characterized in that for a cooking temperature of 80°C, the cooking time is between 10 minutes and 1 hour 45 minutes.

7. Process according to Claim 6, characterized in that for a cooking temperature of 80°C, the cooking time is between 30 minutes and 1 hour 30 minutes.

8. Process according to Claim 1, characterized in that for a cooking temperature of 85°C, the cooking time is between 10 minutes and 1 hour 45 minutes.

9. Process according to Claim 8, characterized in that for a cooking temperature of 85°C, the cooking time is between 30 minutes and 1 hour.

10. Process according to Claim 1, characterized in that for a cooking temperature of 90°C, the cooking time is between 5 minutes and 45 minutes.

11. Process according to Claim 10, characterized in that for a cooking temperature of 90°C, the cooking time is between 7 minutes and 10 minutes.

12. Process according to Claim 1, characterized in that the basic compound of an alkali metal is chosen from NaOH, KOH, $NaHCO_3$, $Na_2CO_3$, $K_2CO_3$, $KHCO_3$ and mixtures of at least two of the basic compounds of an alkali metal which are listed above.

13. Process according to Claim 12, characterized in that the basic compound of an alkali metal is NaOH or $Na_2CO_3$.

14. Process according to Claim 1, characterized in that the basic compound of an alkaline-earth metal is chosen from CaO, MgO, $Ca(OH)_2$, $Mg(OH)_2$, $CaCO_3$ and mixtures of at least two of the basic compounds of an alkaline-earth metal which are listed above.

**15.** Process according to Claim 14, characterized in that the basic compound of an alkaline-earth metal is $Ca(OH)_2$, $Mg(OH)_2$ or MgO.

**16.** Process according to Claim 1, characterized in that the halide of an alkaline-earth metal is $CaCl_2$ or $MgCl_2$.

**17.** Process according to Claim 14, characterized in that the halide of an alkaline-earth metal is $CaCl_2$.

**18.** Process according to Claim 1, characterized in that the basicity $\beta$ of the high-basicity polyaluminium chlorosulphate of formula (I) is between 65 % and 70 %.

**19.** Application of high-basicity polyaluminium chlorosulphates of formula (I) obtained by a process according to any one of Claims 1 to 18 to the treatment of drinking water.

**Patentansprüche**

**1.** Verfahren zur Herstellung eines Aluminiumpolychlorsulfats mit hoher Basizität der allgemeinen Formel:

$$Al(OH)_aCl_bY_c/dM'Cl_2/eM''Cl \qquad (I)$$

in der

Y ein zweiwertiges Anion bedeutet, z.B. $SO_4^{2-}$,
M' ein zweiwertiges Kation bedeutet, z.B. ein Erdalkalimetall,
M'' ein einwertiges Kation bedeutet, z.B. ein Alkalimetall oder Ammonium,
a, b, c und d ganze positive Zahlen oder positive Bruchzahlen ungleich
0 sind und
e 0 eine ganze positive Zahl oder positive Bruchzahl sein kann, so daß gilt

1,8 < a < 2,25
0,001 < c < 0,150
b = 3 - 2c - a und 2d + e + b ≤ 3, und mit einer Basizität $\beta$ zwischen 60 % und 75 %, wobei diese Basizität durch die Formel $\beta = 100 \times (3Al + 2M' + M'' - 2Y - Cl) / 3Al$ definiert ist, in der Al, M', M'', Y und Cl in Molen definiert sind, wobei das genannte Verfahren darin besteht, eine basische Alkaliverbindung, vorzugsweise in wäßriger Lösung, und mindestens eine basische Erdalkaliverbindung oder ein Erdalkalihalogenid in wäßriger Lösung oder als Pulver, in Gegenwart von Sulfationen mit einer basischen Aluminiumchloridlösung der Formel:

$$Al(OH)_xCl_y \qquad (II)$$

zusammenzugeben, in der x eine Zahl zwischen 0,1 und 1,5 und y = 3-x ist, bei einer Temperatur zwischen der Umgebungstemperatur (ungefähr 25 °C) und 70 °C, wobei das genannte Verfahren dadurch gekennzeichnet ist, daß man nach der Basenbildung ein Kochen des erhaltenen Reaktionsgemisches bei einer Temperatur, genannt Kochtemperatur, zwischen 60 °C und 95 °C so durchführt, daß die Kochdauer zwischen 3 und 20 Stunden und vorzugsweise zwischen 5 und 9 Stunden bei einer Kochtemperatur von 60 °C liegt und daß die Kochtemperatur zwischen 5 und 15 Minuten und vorzugsweise zwischen 7 und 10 Minuten bei einer Kochtemperatur von 95 °C liegt.

**2.** Verfahren nach Anspruch 1, dadurch gekennzeichnet, daß bei einer Kochtemperatur von 60 °C die Kochdauer zwischen 5 und 9 Stunden liegt.

**3.** Verfahren nach Anspruch 1, dadurch gekennzeichnet, daß bei einer Kochtemperatur von 95 °C die Kochdauer zwischen 7 und 10 Minuten liegt.

**4.** Verfahren nach Anspruch 1, dadurch gekennzeichnet, daß bei einer Kochtemperatur von 70 °C die Kochdauer zwischen 1 und 5 Stunden liegt.

5. Verfahren nach Anspruch 4, dadurch gekennzeichnet, daß bei einer Kochtemperatur von 70 °C die Kochdauer zwischen 1 und 4 Stunden liegt.

6. Verfahren nach Anspruch 1, dadurch gekennzeichnet, daß bei einer Kochtemperatur von 80 °C die Kochdauer zwischen 10 Minuten und 1 Stunde 45 Minuten liegt.

7. Verfahren nach Anspruch 6, dadurch gekennzeichnet, daß bei einer Kochtemperatur von 80 °C die Kochdauer zwischen 30 Minuten und 1 Stunde 30 Minuten liegt.

8. Verfahren nach Anspruch 1, dadurch gekennzeichnet, daß bei einer Kochtemperatur von 85 °C die Kochdauer zwischen 10 Minuten und 1 Stunde 45 Minuten liegt.

9. Verfahren nach Anspruch 8, dadurch gekennzeichnet, daß bei einer Kochtemperatur von 85 °C die Kochdauer zwischen 30 Minuten und 1 Stunde liegt.

10. Verfahren nach Anspruch 1, dadurch gekennzeichnet, daß bei einer Kochtemperatur von 90 °C die Kochdauer zwischen 5 und 45 Minuten liegt.

11. Verfahren nach Anspruch 10, dadurch gekennzeichnet, daß bei einer Kochtemperatur von 90 °C die Kochdauer zwischen 7 und 10 Minuten liegt.

12. Verfahren nach Anspruch 1, dadurch gekennzeichnet, daß die basische Alkaliverbindung aus NaOH, KOH, $NaHCO_3$, $Na_2CO_3$, $K_2CO_3$, $KHCO_3$ und den Gemischen aus mindestens zwei der zuvor aufgezählten basischen Alkaliverbindungen gewählt ist.

13. Verfahren nach Anspruch 12, dadurch gekennzeichnet, daß die basische Alkaliverbindung NaOH oder $Na_2CO_3$ ist.

14. Verfahren nach Anspruch 1, dadurch gekennzeichnet, daß die basische Erdalkaliverbindung aus CaO, MgO, Ca$(OH)_2$, Mg$(OH)_2$, $CaCO_3$ und den Gemischen aus mindestens zwei der zuvor aufgezählten basischen Erdalkaliverbindungen gewählt ist.

15. Verfahren nach Anspruch 14, dadurch gekennzeichnet, daß die basische Erdalkaliverbindung Ca$(OH)_2$, Mg$(OH)_2$ oder MgO ist.

16. Verfahren nach Anspruch 1, dadurch gekennzeichnet, daß das Erdalkalihalogenid des $CaCl_2$ oder $MgCl_2$ ist.

17. Verfahren nach Anspruch 14, dadurch gekennzeichnet, daß das Erdalkalihalogenid $CaCl_2$ ist.

18. Verfahren nach Anspruch 1, dadurch gekennzeichnet, daß die Basizität $\beta$ des Aluminiumpolychlorsulfats mit hoher Basizität der Formel (I) zwischen 65 % und 70 % liegt.

19. Verwendung von erhaltenen Aluminiumpolychlorsulfaten hoher Basizität der Formel (I) durch ein Verfahren nach einem der Ansprüche 1 bis 18 zur Behandlung von Trinkwasser.